Europäisches Patentamt

European Patent Office

Office européen des brevets

(19)

(11) Veröffentlichungsnummer: **0 068 201**
**B1**

(12) **EUROPÄISCHE PATENTSCHRIFT**

(45) Veröffentlichungstag der Patentschrift:
20.03.85

(51) Int. Cl.⁴: **G 03 B 42/02**

(21) Anmeldenummer: **82105039.0**

(22) Anmeldetag: **08.06.82**

(54) **Röntgenuntersuchungsgerät.**

(30) Priorität: **22.06.81 DE 3124434**

(43) Veröffentlichungstag der Anmeldung:
**05.01.83 Patentblatt 83/1**

(45) Bekanntmachung des Hinweises auf die Patenterteilung:
**20.03.85 Patentblatt 85/12**

(84) Benannte Vertragsstaaten:
**BE CH DE FR GB IT LI SE**

(56) Entgegenhaltungen:
**DE - A - 1 522 179**
**DE - A - 2 333 157**
**DE - A - 2 417 891**
**DE - B - 1 040 362**
**DE - B - 1 145 009**
**DE - B - 1 302 110**
**US - A - 3 771 781**

(73) Patentinhaber: **Siemens Aktiengesellschaft, Berlin und München Wittelsbacherplatz 2, D-8000 München 2 (DE)**

(72) Erfinder: **Förster, Erich, Markweg 3, D-8520 Erlangen (DE)**

**Beschreibung**

Die Erfindung bezieht sich auf ein Röntgenuntersuchungsgerät mit einer Röntgenröhre mit angeflanschter Strahlenblende und einem zur Röntgenröhre ausgerichtet gehaltenen Bildschichtträger mit Halterungen zur zentrischen Positionierung von Röntgenfilmkassetten unterschiedlicher Formate mit vorgegebenen Abmessungen.

In der medizinischen Technik sind die Filmformate und die zugehörigen Röntgenfilmkassetten in bestimmten Grössenverhältnissen zueinander abgestuft. Diese Abstufung variiert jedoch in manchen Ländern gegenüber derjenigen in anderen Ländern, so dass sich in der Praxis eine sehr grosse Vielfalt von Formaten ergibt. Dies verteuert die im allgemeinen weltweit vertriebenen Röntgenuntersuchungsgeräte beträchtlich, weil sie hinsichtlich der Halterung und Positionierung der Filme bzw. Röntgenfilmkassetten aber auch hinsichtlich der Einblendtechnik dieser Vielfalt angepasst werden müssen.

Durch die DE-AS 1 145 009 ist es bekannt, jeder Kassettengrösse einen besonderen Einsatzrahmen zuzuordnen, die bei Bedarf am Kassettenwagen befestigt werden. Als nachteilig erweist sich hierbei, dass der benötigte Einsatzrahmen erst befestigt werden muss und die nicht gebrauchten Einsatzrahmen verlegt werden können.

Der Erfindung liegt die Aufgabe zugrunde, durch sinnvolle Beschränkung auf wesentliche Formate ein preiswertes Röntgenuntersuchungsgerät zu entwickeln. Dieses Röntgenuntersuchungsgerät soll darüber hinaus in der Handhabung einfach und störungsunempfindlich sein, so dass es auch in den Entwicklungsländern von ungeschultem Hilfspersonal bedienbar ist.

Die Aufgabe ist bei einem Röntgenuntersuchungsgerät der eingangs genannten Art erfindungsgemäss durch die im Kennzeichen des Patentanspruches angegebenen Merkmale gelöst. Der damit verbundene Verzicht, die Spannbacken an die unterschiedlichen Kassettenformate anzupassen, vereinfacht die Konstruktion des Bildschichtträgers beträchtlich. Dieser Effekt wird noch dadurch verstärkt, dass die Haltebacken nur zu jeweils einer Kassettengrösse passen müssen. Ebenfalls werden hierdurch lose herumliegende, separat einsetzbare und separat verstaubare Bauteile vermieden. Da durch diese Anordnung der Stellweg für die Haltebacken verkürzt ist, vereinfacht sich auch der Mechanismus für deren Verbringung in die Arbeitsposition. Es genügt in diesem Fall die Betätigung nur dieses einen Stellgliedes für die Aktivierung aller einem Kassettenformat zugeordneter Spannbacken.

Der Stellmechanismus für das Verbringen in die Arbeitsposition wird besonders vereinfacht, wenn die einem bestimmten Kassettenformat zugeordneten Haltebacken an einem einzigen starren rahmenartigen Körper ausgebildet sind.

In zweckmässiger Ausgestaltung der Erfindung kann die Kassettenkante von den Haltebacken und der Auflagefläche für die Kassette an drei Seiten umfasst werden. Dies hat den Vorteil, dass ein Herausfallen oder Verrutschen der Röntgenfilmkassette auch in Kipplagen des Röntgenuntersuchungsgerätes vermieden wird.

In besonders vorteilhafter Weiterbildung der Erfindung können je zwei einander gegenüberliegende Haltebacken die Kanten der Röntgenfilmkassette zusammen mit der Auflagefläche für die Kassetten dreiseitig umfassen und die anderen Haltebacken die Röntgenfilmkassette im wesentlichen nur gegen Verschiebung auf Auflagefläche sichern. Hierdurch besteht die Möglichkeit, die Röntgenfilmkassette auch dann, wenn sich die Spannbacken in der Arbeitsposition befinden, von der Seite her schräg einzuschieben.

Weitere Einzelheiten der Erfindung werden anhand eines in den Figuren dargestellten Ausführungsbeispieles näher erläutert. Es zeigen:

Fig. 1 eine schaubildliche Ansicht eines Röntgenuntersuchungsgerätes mit dem erfindungsgemässen Kassettenhalter,

Fig. 2 eine Seitenansicht des Kassettenhalters bei aufgebrochener Stirnseite, und

Fig. 3 einen Schnitt längs der Linie III-III der Fig. 2.

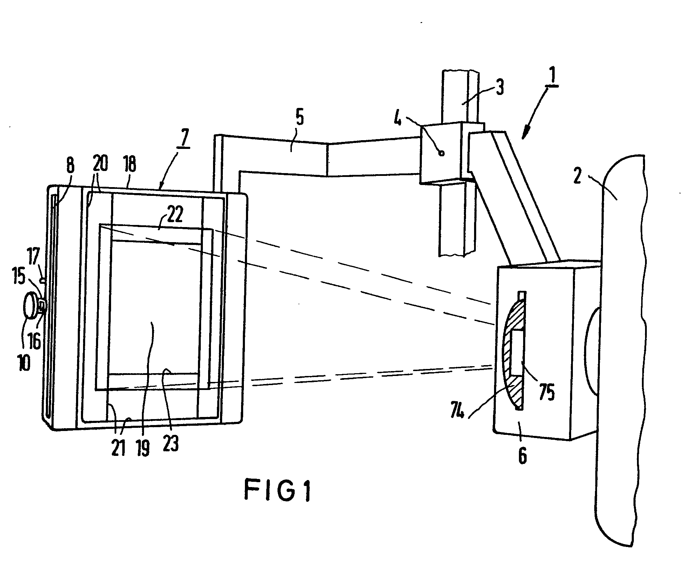

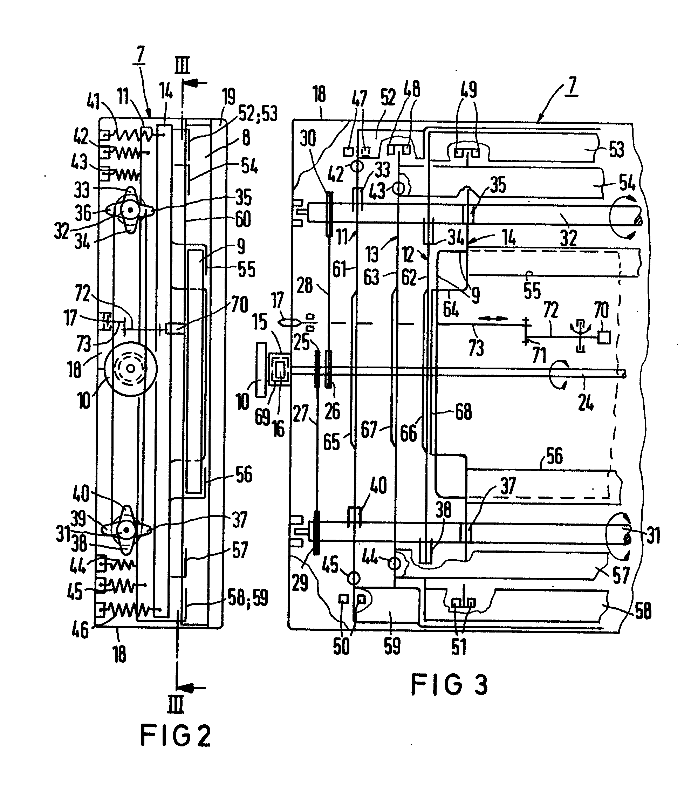

In der Fig. 1 erkennt man ein Röntgenuntersuchungsgerät 1, bei dem die Röntgenröhre 2 an einem an einer Stativsäule 3 höhenverstellbaren und um eine horizontale Achse 4 drehbaren Röhre-Bildschichtträger-Arm 5 gehaltert ist. An der Röntgenröhre 2 ist eine Strahlenblende 6 angeflanscht. An dem der Röntgenröhre 2 gegenüberliegenden Ende des Röhre-Bildschichtträger-Arms ist ein Kassettenhalter 7 für einen Bildschichtträger in einem konstanten Abstand zur Röntgenröhre und zu deren Strahlenkegel ausgerichtet befestigt. Der Kassettenhalter 7 besitzt einen Einschubschlitz 8, durch den hindurch Röntgenfilmkassetten 9 (Fig. 2) bestimmter vorgebener Formate eingeschoben werden können. Seitlich am Kassettenhalter 7 erkennt man einen Einstellknopf 10, mit dem Halterungen 11, 12, 13, 14 (Fig. 3) für die Röntgenfilmkassette der vorgesehenen Formate in eine Arbeitsposition und wieder zurück verbringbar sind. Am zylindrischen Ansatz 15 des Einstellknopfes 10 ist ein kleines Fenster 16 zu erkennen, an dem die jeweilige Einstellung der Halterungen 11, 12, 13, 14 ablesbar ist. Neben dem Einstellknopf 10 steht eine die Beladung mit einer Röntgenfilmkassette anzeigende Zunge 17 seitlich aus dem Gehäuse 18 des Kassettenhalters 7 vor. Die der Röntgenröhre 2 zugewandte Frontplatte 19 des Kassettenhalters 7 trägt aufgemalte Formatbegrenzungen 20, 21, 22, 23 für die vier im Ausführungsbeispiel vorgesehenen Kassettenformate. Die Frontplatte ist in hier nicht weiter dargestellter Weise über ein in der Einschubebene angeordnetes Scharnier (nicht dargestellt) aufklappbar.

In den Fig. 2 und 3 erkennt man durch das aufgebrochene Gehäuse 18 des Kassettenhalters 7 hindurch dessen inneren Aufbau. So zeigt die Fig. 3, dass der Einstellknopf 10 auf einer Einstellachse 24 sitzt, auf der zwei Zahnriemenscheiben 25, 26 befestigt sind. Diese beiden Zahnriemenscheiben sind von je einem Zahnriemen 27, 28 umschlungen. Die beiden Zahnriemen treiben über zwei weitere Zahnriemenscheiben 29, 30 je eine parallel zur Einstellachse 24 im Gehäuse 18 des Kassettenhalters 7 drehbare Nockenwelle 31, 32 an. Jede Nockenwelle trägt an ihren beiden Enden je vier Nocken 33, 34, 35, 36, 37, 38, 39, 40 (nur acht dargestellt), die jeweils um 90° gegeneinander verdreht sind. Auf den Nocken der beiden Nockenwellen ruhen die vier jeweils einem Kassettenformat zugeordneten rahmenförmigen Halterungen 11, 12, 13, 14. Diese Halterungen werden von im Gehäuse 18 verankerten Zugfedern 41, 42, 43, 44, 45, 46 (nur sechs dargestellt) gegen die Nocken der Nockenwellen gezogen. Sie sind durch Führungen 47, 48, 49, 50, 51 gegen seitliches Verrutschen gesichert. Diese rahmenförmigen Halterungen 11, 12, 13, 14 tragen an ihren parallel zu den Nockenwellen 31, 32 ausgerichteten Schenkeln — wie die Fig. 2 zeigt — aus der Ebene des Rahmens vorstehende L-förmige Haltebacken 52, 53, 54, 55, 56, 57, 58, 59, die in der Arbeitsstellung die eingespannte Röntgenfilmkassette 9 zwischen sich und der Auflagefläche 60 für die Röntgenfilmkassetten im Innern des Einschubschlitzes 8 halten. Dabei sind die Haltebacken 52, 59 ausgestanzt, um den der gleichen Kassettenlänge zugeordneten Haltebacken 53, 58 Platz zu lassen.

In der Wartestellung liegen die abgewinkelten Enden der L-förmigen Haltebacken 52, 53, 54, 55, 56, 57, 58, 59 flach an der inneren Auflagefläche 60 für die Röntgenfilmkassette im Einschubschlitz 8 an, so dass sie die Aufnahme einer Röntgenfilmkassette anderen Formats nicht behindern. Die dazu rechtwinkligen Abschnitte 61, 62, 63, 64 der einzelnen rahmenförmigen Halterungen 11, 12, 13, 14 bestehen aus hochkant auf den Nocken 33 bis 40 der beiden Nockenwellen 31, 32 aufliegendem Flachmaterial. Sie ragen in der Wartestellung mit ihren mittleren, als Haltebacken 65, 66, 67, 68 dienenden Abschnitten, deren vorstehende Kante lediglich leicht verrundet ist, bis zu Auflagefläche 60 für die Röntgenfilmkassetten im Einschubschlitz 8 auf. In der Arbeitsposition ragen diese als seitliche Haltebacken 65, 66, 67, 68 dienenden mittleren Abschnitte etwa genauso weit in den Einschubschlitz 8 herein wie die L-förmigen Haltebacken selbst. Die Auflagefläche 60 für die Röntgenfilmkassetten ist für den Durchtritt der verschiedenen Haltebacken 52 bis 59, 65 bis 68 geschlitzt. Zur gleichmässigen Verschiebung der Halterungen 11, 12, 13, 14 sind die jeweils einem Kassettenformat zugeordneten Nocken der beiden Nockenwellen 31, 32 untereinander gleichsinnig ausgerichtet. Damit die einzelnen Halterungen nacheinander in die Arbeitsposition gebracht werden, sind die den verschiedenen Kassettenformaten zugeordneten Nocken jedoch gegeneinander um etwa 90°C verdreht.

Auf der Einstellachse 24 sind aber, wie die Fig. 3 zeigt, nicht nur die beiden Zahnriemenscheiben 25, 26 befestigt, mit denen die beiden Nockenwellen 31, 32 gedreht werden. Auf der Einstellachse 24 ist auch eine Symboltrommel 69 befestigt, die vier verschiedenfarbige Abschnitte (nicht dargestellt) trägt. Diese Symboltrommel befindet sich im Innern des zylindrischen Ansatzes 15 beim Einstellknopf 10. Ihre jeweilige Stellung ist durch das dort eingelassene Fenster 16 sichtbar. In der Fig. 3 erkennt man auch einen annähernd in der Mitte des Kassettenhalters 7 angeordneten Fühler 70, der an dem einen Ende eines im Gehäuse 18 des Kassettenhalters 7 um eine Schwenkachse 71 drehbaren zweiarmigen Hebels 72 gelagert ist. Das freie Ende des zweiarmigen Hebels ist gelenkig mit einer Zugstange 73 gekuppelt, die entlang des Bodens des Kassettenhalters 7 geführt ist und als Zunge 17 seitlich neben dem Einstellknopf 10 aus dem Gehäuse 18 des Kassettenhalters herausschaut.

Soll ein Patient untersucht werden, so kann der Arzt eines der vier auf der Frontplatte 19 des Kassettenhalters 7 farbig gekennzeichneten Filmformate wählen. Das Wählen des Filmformates erfolgt durch Drehen des Einstellknopfes 10 und zwar so lange, bis im Sichtbereich des Fensters 16 am zylindrischen Ansatz 15 jene Farbe erscheint, die auf der Frontplatte dem gewählten Filmformat entspricht. Beim Drehen des Einstellknopfes 10 wird mit der Einstellachse 24 sowohl die auf der Einstellachse befestigte Symboltrommel 69 als auch die beiden Zahnriemenscheiben 25, 26 und die beiden mit ihnen gekuppelten Nockenwellen 31, 32 gedreht. Dabei werden von den Nocken 33 bis 40 nacheinander die den einzelnen Filmformaten zugeordneten Halterungen 11, 12, 13, 14 mit ihren Haltebacken 52 bis 59, 65 bis 68 entgegen der Kraft der zugehörigen Zugfedern 41 bis 46 in den Einschubschlitz 8 gedrückt. Jeder Arbeitsstellung der vier rahmenartigen Halterungen 11, 12, 13, 14 entspricht sowohl eine bestimmte Stellung der beiden Nockenwellen 31, 32 als auch der Einstellachse 24 und der auf der Einstellachse befestigten Symboltrommel 69. Daher zeigt der im Fenster 16 sichtbare Farbabschnitt der Symboltrommel an, welche der rahmenförmigen Halterungen gerade in Arbeitsstellung ist.

Sobald im Fenster 16 die Farbe des gewählten Filmformates erscheint, kann die gewählte Röntgenfilmkassette 9 nunmehr nach dem Aufklappen der vorderen Frontplatte 19 von der Seite zwischen die diesem Format zugeordneten winkelförmigen Haltebacken 55, 56 eingeschoben werden. Dabei wird der Fühler 70 zurückgedrückt und der zweiarmige Hebel 72 um die Schwenkachse 71 gedreht. Dadurch wird das andere Ende des zweiarmigen Hebels 72 in der Darstellung der Fig. 3 nach links verschoben und die Zunge 18 seitlich neben dem Einstellknopf aus einem Schlitz in der Gehäusewand herausgeschoben. Dadurch ist auch bei zugeklappter Frontplatte 19 sofort zu erkennen, dass eine Röntgenfilmkassette 9 eingelegt ist. An der am Fenster 16 neben dem Einstellknopf erkenntlichen Farbe ist auch das Format der eingelegten Röntgenfilmkassette ablesbar. Dieses Format lässt sich an der Strahlenblende 6 durch Drehen der runden Blendenscheibe 74 mit ihren den verschiedenen Formaten angepassten Durchbrüchen 75 einstellen, wenn man diese so lange dreht, bis der vorstehende Rand dieselbe Farbe wie die Symboltrommel 69 im Fenster 16 unterhalb des Einstellknopfes 10 zeigt.

## Patentansprüche

1. Röntgenuntersuchungsgerät mit einer Röntgenröhre mit angeflanschter Strahlenblende und einem zur Röntgenröhre ausgerichtet gehaltenen Bildschichtträger mit Halterungen zur zentrischen Positionierung von Röntgenfilmkassetten unterschiedlicher Formate mit vorgegebenen Abmessungen, dadurch gekennzeichnet, dass für jedes Kassettenformat mehrere Haltebacken (52, bis 59, 65 bis 68) vorgesehen sind und dass jeweils nur die einer bestimmten Kassettengrösse zugeordneten Haltebacken (52 bis 59, 65 bis 68) gemeinsam durch ein Stellglied (10) aus einer Warteposition in einer der Auflagefläche (60) für die Röntgenfilmkassetten unmittelbar benachbarten parallelen Ebene in eine von der Auflagefläche beabstandete Arbeitsposition bringbar sind.

2. Röntgenuntersuchungsgerät nach Anspruch 1, dadurch gekennzeichnet, dass die einem bestimmten Kassettenformat zugeordneten Haltebacken (52 bis 59, 65 bis 68) an einem einzigen starren rahmenartigen Körper (11 bis 14) ausgebildet sind.

3. Röntgenuntersuchungsgerät nach Anspruch 1 oder 2, dadurch gekennzeichnet, dass die Kassettenkante von den Haltebacken (52 bis 59, 65 bis 68) und der Auflagefläche (60) für die Kassetten (9) an drei Seiten umfasst wird.

4. Röntgenuntersuchungsgerät nach Anspruch 1 oder 2, dadurch gekennzeichnet, dass je zwei einander gegenüberstehende Haltebacken (52 bis 59) die Kanten der Röntgenfilmkassette (9) zusammen mit der Auflagefläche (60) für die Kassette dreiseitig umfassen und dass die anderen Haltebacken (65 bis 68) die Röntgenfilmkassette (9) im wesentlichen nur gegen Verschiebung auf der Auflagefläche (60) sichern.

5. Röntgenuntersuchungsgerät nach einem der Ansprüche 1 bis 4, dadurch gekennzeichnet, dass mit dem Stellglied (10) ein dem gewählten Kassettenformat zugeordnetes Symbol in einen Sichtbereich (16) bringbar ist.

6. Röntgenuntersuchungsgerät nach Anspruch 1, dadurch gekennzeichnet, dass das Symbol mit einem dem entsprechenden Format zugeordneten Symbol an der Strahlenblende (6) übereinstimmt.

7. Röntgenuntersuchungsgerät nach Anspruch 5 oder 6, dadurch gekennzeichnet, dass das Symbol eine Farbe ist.

8. Röntgenuntersuchungsgerät nach einem der Ansprüche 1 bis 7, dadurch gekennzeichnet, dass mit dem Stellglied (10) Nocken (33 bis 40) gekoppelt sind, über die nacheinander die Haltebacken (52 bis 59, 65 bis 68) jeweils eines Formates aus der Warteposition in die jeweilige Arbeitsposition und wieder zurück bringbar sind.

9. Röntgenuntersuchungsgerät nach einem der Ansprüche 1 bis 8, dadurch gekennzeichnet, dass mit dem Stellglied (10) Kurbeln gekoppelt sind, über die nacheinander die Haltebacken jeweils eines Formates aus der Warteposition in die jeweilige Arbeitsposition und wieder zurück bringbar sind.

10. Röntgenuntersuchungsgerät nach einem der Ansprüche 1 bis 9, dadurch gekennzeichnet, dass die Haltebacken (52 bis 59, 65 bis 68) entgegen der Kraft mindestens einer Feder (41 bis 46) in die Arbeitsposition bringbar sind.

11. Röntgenuntersuchungsgerät nach einem der Ansprüche 1 bis 10, dadurch gekennzeichnet, dass ein federbelasteter, mit einer Anzeige (17) gekoppelter Fühler (70) in den Positionsbereich der kleinsten spannbaren Röntgenfilmkassette hineinragt.

## Claims

1. X-ray examination apparatus having an X-ray tube with flange-attached beam diaphragm and a tomograph carrier which is maintained in alignment with the X-ray tube and possesses holders for the centred positioning of X-ray film cassettes which possess different formats with predetermined dimensions, characterized in that for each cassette format there are provided a plurality of securing jaws (52 to 59, 65 to 68), and that in each case only those securing jaws (52 to 59, 65 to 68) assigned to the specific cassette size can be brought out of a waiting position in a parallel plane directly adjacent to the bearing surface (60) for the X-ray film cassettes by a common control element (10), into an operating position located at a distance from the bearing surface.

2. X-ray examination apparatus as claimed in claim 1, characterized in that the securing jaws (52 to 59, 65 to 68) which are assigned to a specific cassette format are designed to form one single rigid, frame-like body (11 to 14).

3. X-ray examination apparatus as claimed in claim 1 or 2, characterized in that the cassette edge is gripped on three sides by the securing jaws (52 to 59, 65 to 68) and the bearing surface (60) for the cassettes (9).

4. X-ray examination apparatus as claimed in claim 1 or 2, characterized in that two securing jaws (52 to 59), which are arranged opposite one another engage edges of the X-ray film cassette (9) and together with the bearing surface (60) for the cassette grip it on three sides, and that the other securing jaws (65 to 68) basically secure the X-ray film cassette (9) only in respect of displacement on the bearing surface (60).

5. X-ray examination apparatus as claimed in one of claims 1 to 4, characterized in that with the assistance of the control element (10) a symbol assigned to the selected cassette format can be brought into a viewing zone (16).

6. X-ray examination apparatus as claimed in claim 1, characterized in that the symbol is identical to a symbol, assigned to the corresponding format, on the beam diaphragm (6).

7. X-ray examination apparatus as claimed in claim 5 or 6, characterized in that the symbol is a colour.

8. X-ray examination apparatus as claimed in one of claims 1 to 7, characterized in that the control element (10) is coupled to cams (33 to 40) via which the securing jaws (52 to 59, 65 to 68), in each case corresponding to one format, can be consecutively brought out of the waiting position into the particular operating position and vice versa.

9. X-ray examination apparatus as claimed in one of claims 1 to 8, characterized in that the control element (10) is coupled to cranks via which the securing jaws, in each case corresponding to one format, can be consecutively brought out of the waiting position into the particular operating position and vice versa.

10. X-ray examination apparatus as claimed in one of claims 1 to 9, characterized in that the securing jaws (52 to 59, 65 to 68) can be brought into the operating position against the force of at least one spring (41 to 46).

11. X-ray examination apparatus as claimed in one of claims 1 to 10, characterized in that a springloaded sensor (70), which is coupled to a display (17), projects into the positioning zone of the smallest X-ray film cassette which can be gripped.

## Revendications

1. Appareil pour l'examen radiologique, du type comprenant un tube générateur de rayons X auquel est bridé un diaphragme du rayonnement, et un support de couche sensible qui est maintenu orienté en direction de ce tube et qui présente des moyens de support permettant le positionnement centré de cassettes pour films radiologiques de formats différents à dimensions prédéterminées, caractérisé en ce qu'il est prévu pour chaque format de cassette plusieurs mâchoires de serrage (52 à 59, 65 à 68) et en ce qu'à chaque fois seules les mâchoires de serrage (52 à 59, 65 à 68) qui sont associées à une dimension déterminée de cassette peuvent être déplacées en commun, à l'aide d'un organe de commande (10), à partir d'une position d'attente et dans un plan parallèle directement voisin de la surface d'appui (60) prévue pour les cassettes, jusque dans une position de travail situé à distance de cette surface d'appui.

2. Appareil pour l'examen radiologique suivant la revendication 1, caractérisé en ce que les mâchoires de serrage (52 à 59, 65 à 68) associées à un format de cassette déterminé sont ménagées sur un corps rigide unique en forme de cadre (11 à 14).

3. Appareil pour l'examen radiologique suivant la revendication 1 ou 2, caractérisé en ce que le bord de la cassette est enserré sur trois côtés par les mâchoires de serrage (52 à 59, 65 à 68) et par la surface d'appui (60) prévue pour cette cassette (9).

4. Appareil pour l'examen radiologique suivant la revendication 1 ou 2, caractérisé en ce que deux mâchoires de serrage (52 à 59) situées en regard l'une de l'autre entourent sur trois côtés le bord de la cassette (9) en même temps que la surface d'appui (60) pour la cassette, et en ce que les autres mâchoires (65 à 68) ne servent essentiellement qu'à empêcher un glissement de la cassette pour film radiologique (9) sur la surface d'appui (60).

5. Appareil pour l'examen radiologique suivant l'une des revendications 1 à 4, caractérisé en ce que l'on peut, à l'aide de l'organe de commande (10), amener dans une zone de visibilité (16), un symbole qui est associé au format de cassette choisi.

6. Appareil pour l'examen radiologique suivant la revendication 1, caractérisé en ce que ledit symbole coïncide avec un symbole prévu sur le diaphragme de rayonnement (6) et associé au format correspondant.

7. Appareil pour l'examen radiologique suivant la revendication 5 ou 6, caractérisé en ce que le symbole est constitué par une couleur.

8. Appareil pour l'examen radiologique suivant l'une des revendications 1 à 7, caractérisé en ce qu'à l'organe de commande (10) sont appliquées des cames (33 à 40) par l'intermédiaire desquelles on peut amener successivement dans la position de travail correspondante, et inversement, les mâchoires de serrage (52 à 59, 65 à 68) de chaque format, et ceci à partir de la position d'attente.

9. Appareil pour l'examen radiologique suivant l'une des revendications 1 à 8, caractérisé en ce qu'à l'organe de commande (10) sont accouplées des bielles par l'intermédiaire desquelles on peut amener successivement dans la postion de travail correspondante, et inversement, les mâchoires de serrage de chaque format, et ceci à partir de la position d'attente.

10. Appareil pour l'examen radiologique suivant l'une des revendications 1 à 9, caractérisé en ce que les mâchoires de serrage (52 à 59, 65 à 68) peuvent être amenées en position de travail à l'encontre de la force d'au moins un ressort (41 à 46).

11. Appareil pour l'examen radiologique suivant l'une des revendications 1 à 10, caractérisé en ce qu'un palpeur (70) soumis à l'action d'un ressort et accouplé à un affichage (17) fait saillie dans la zone de mise en place de la plus petite cassette pour film radiologique qui puisse être enserrée.

FIG 1

0 068 201

FIG 2

FIG 3

9